# EUROPEAN PATENT APPLICATION

(11) **EP 1 627 782 A1**
(43) Date of publication of application: **22.02.2006**
(21) Application number: 04734355.3
(22) Date of filing: 21.05.2004
(51) Int. Cl.: B60R 21/26

(54) **INFLATOR**

(30) Priority: 29.05.2003 JP 2003151887
(71) Applicant: DAICEL CHEMICAL INDUSTRIES, LTD., Sakai-shi, Osaka 590-8501 (JP)
(72) Inventor: KATSUDA, Nobuyuki, Himeji-shi, Hyogo (JP); YAMASHITA, Haruhiko, Himeji-shi, Hyogo (JP)
(74) Representative: Grünecker, Kinkeldey, Stockmair & Schwanhäusser Anwaltssozietät
(86) International application number: PCT/JP2004/006946
(87) International publication number: WO 2004/106124

(57) **Abstract**

An inflator in which wiring work from an igniter to a power source is easy is provided.

The inflator comprises one igniter 36 and first gas discharge ports 34 and 46 disposed separately. After the first rupturable plate 38 is broken by activation of the igniter 36, breaking energy moves inside the transfer tube 24, so that the second rupturable plate 48 is surely broken.

## Description

### Technical Field of The Invention

The present invention relates to an inflator suitable as an inflator for an air bag for a side collision disposed in an automobile in particular.

### Background of the Invention

Various kinds of inflator such as an inflator for an air bag of a driver side, an inflator for an air bag of a front passenger side, an inflator for an air bag for a side collision, an inflator for a curtain air bag, an inflator for a knee bolster, an inflator for an inflatable seat belt, an inflator for a tubular system, an inflator for a pretensioner are known as an inflator for an inflation type security system of a motor vehicle, which are for protecting a vehicle occupant most suitably according to a seat location in a vehicle such as a driver side, a front passenger side.

Among these, since an installation location of an inflator for an air bag for side collision is limited as compared to an inflator for an air bag of a driver side or a front passenger side, there are many demands with respect to wiring work to connect an igniter of an inflator to a power source of an automobile, in addition to demands with respect to shape, size, function etc.
Patent Document 1: WO-A No. 97/08020
Patent Document 2: WO-A No. 97/32753
Patent Document 3: US-B No. 5,794,973
Patent Document 4: US-B No. 6,039,348

### Disclosure of the Invention

### Problem to be Solved by the Invention

An object of the present invention is to provide an inflator, especially an inflator suitable for an air bag for a side collision, in which direction of air bag inflation and development can be controlled easily and wiring work between an igniter of an inflator and a power source of an automobile can be also controlled easily.

### Means to Solve the Problem

The invention of claim 1 provides, as a means to solve the problem, an inflator comprising a tubular inflator housing, an ignition means chamber connected to one end of the tubular inflator housing and a diffuser portion connected to the other end of the tubular inflator housing,
wherein the ignition means chamber includes an igniter and a gas discharge port, and by a first rupturable plate closes between the inside of the inflator housing and the ignition means chamber,
the diffuser portion has a gas discharge port, a second rupturable plate closes between the inside of the inflator housing and the diffuser portion, and
a pressurized gas is charged under a high pressure inside the tubular inflator housing.

In the inflator of the present invention, since gas discharge ports are disposed separately at both end portions, as compared to a case that gas discharge ports are arranged only at one end portion, in inflation and development of an air bag, development in the vertical and/or horizontal direction and a developing speed can be controlled easily. Also, it is possible to introduce gas into different air bags to inflate simultaneously, or to introduce gas into one air bag through two different portions to inflate the air bag uniformly in the vertical and/or horizontal direction.

Further, in the inflator of the present invention, since the igniter is installed only at one end portion, a lead wire connecting to power source (battery) is drawn from only one portion, so that, as compared to a case of two igniters, wiring work can be performed easily and only a small space is needed.

Charging pressure of a pressurized gas charged into the inflator housing (inert gas such as argon, helium, nitrogen gas and so on) is different by kinds of inflator etc. , but when applied to an inflator for an air bag of an automobile, the maximum pressure is about 70,000 kPa.

The invention of claim 2 provides an inflator according to the invention of claim 1, in which a leading means of breaking energy for breaking the second rupturable plate is arranged in a space from the first rupturable plate to the second rupturable plate in the tubular inflator housing, and by activation of the igniter accommodated in the ignition means chamber, the first rupturable plate is broken first and then, the second rupture is broken later.

The leading means of breaking energy for breaking the second rupturable plate is a tube disposed in a space from the first rupturable plate to the second rupturable plate, and it is preferable that the breaking energy is transferred through the tube.

In the present invention, "in a space from the first rupturable plate to the second rupturable plate" means from a position contacting with or in the vicinity of the first rupturable plate, to a position contacting with or in the vicinity of the second rupturable plate. The same applies to each invention below.

In order to eject the pressurized gas through gas discharge ports disposed separately, it is necessary to break the first and second rupturable plates and to make the pressurized gas, which is charged under a high pressure in the inflator housing, movable. Here, since the first rupturable plate is placed in the vicinity of the igniter, it is easily ruptured. However, since the second rupturable plate is apart from the igniter, it becomes important to enhance breaking certainty.

Thus, in the inventions of claims 2 and 3, when two rupturable plates are broken by a single igniter, breakage of the second rupturable plate is highly secured by arranging a leading means of breaking energy for breaking the second rupturable plate, preferably a tube disposed between the first rupturable plate and the second rupturable plate.

The invention of claim 4 provides an inflator of the invention of claim 1, in which a leading means of breaking energy for breaking the second rupturable plate is arranged in a space from the first rupturable plate to the second rupturable plate in the tubular inflator housing, and further a movable body moving on receiving the breaking energy and colliding with the second rupturable plate is also provided, and, by activation of the igniter accommodated in the ignition means chamber, the first rupturable plate is broken first and the second rupturable plate is broken later.

The leading means of breaking energy for breaking the second rupturable plate is a tube disposed in a space from the first rupturable plate to the second rupturable plate, and it is preferable that the movable body is disposed in the tube and it moves in the tube on receiving the breaking energy to collide with the second rupturable plate.

In the inventions of claims 4 and 5, when two rupturable plates are broken by a single igniter, breakage of the second rupturable plate is highly secured by arranging the movable body together with a leading means of breaking energy for breaking the second rupturable plate, preferably a tube disposed in a space from the first rupturable plate to the second rupturable plate.

Since this movable body is to collide with the second rupturable plate to break the same, for example, one which is made of the same metal as that of the second rupturable plate and has a sharp arrowhead-like top can be used.

The invention of claim 6 provides an inflator according to the invention of claim 1, in which the leading means of breaking energy for breaking the second rupturable plate is arranged from a position of the first rupturable plate to a position of the second rupturable plate in the tubular inflator housing, the leading means of breaking energy is a detonating cord, and the first rupturable plate is broken first and the second rupturable plate is broken later.

The detonating cord comprises a thin metal tube charged with gunpowder, and an example thereof is disclosed in JP-A 11-263185 and so on.

The detonating cord is disposed such that one end is in a position contacting with or in the vicinity of the first rupturable plate and the other end is in a position contacting with or in the vicinity of the second rupturable plate. In addition, the detonating cord can be disposed in the inflator housing as it is, or it can be disposed in the tube disposed in a space from the first rupturable plate to the second rupturable plate.

In the invention of claim 6, when two rupturable plates are broken by a single igniter, breakage of the second rupturable plate is highly secured by arranging the detonating cord as a leading means of breaking energy for breaking the second rupturable plate.

The invention of claim 7 provides an inflator according to the invention of claim 1, in which a leading means of breaking energy for breaking the second rupturable plate is arranged in a space from the first rupturable plate to the second rupturable plate in the tubular inflator housing, the leading means of breaking energy is a rod-shaped body disposed in a space from the first rupturable plate to the second rupturable plate, the rod-shaped body moves on receiving breaking energy to collide with the second rupturable plate, and the first rupturable plate is broken first and the second rupturable plate is broken later.

In the inventions of claim 7, when two rupturable plates are broken by a single igniter, breakage of the second rupturable plate is highly secured by arranging the rod-shaped body as a leading means of breaking energy for breaking the second rupturable plate.

The invention of claim 8 provides an inflator according to any one of inventions of claims 1 to 7, in which the total opening areas of gas discharge ports on both sides are different.

By thus making the total opening areas of gas discharge ports arranged on both sides different, an ejecting speed (an ejecting amount) of the pressurized gas ejected from each gas discharge port can be adjusted. Such an inflator can easily deal with difference of shape, size and developing direction of an air bag (in the vertical and longitudinal direction) varying in kinds of car and inflator.

The inflator of the present invention can be applied to publicly known inflators for air bags, for example, an inflator for an air bag of a driver side, an inflator for an air bag of a front passenger side, an inflator for an air bag for a side collision, an inflator for a curtain air bag, and in particular, it is suitable to an inflator for an air bag for a side collision.

### Effect of the Invention

The inflator of the present invention has a single igniter and gas discharge ports disposed separately at both ends. Thus, development in the vertical and/or longitudinal direction and a developing speed can be controlled easily, in addition, as compared to a case of two igniters, wiring work is facilitated and only a small space for wiring is needed. Therefore, it is particularly suitable as an inflator for an air bag for a side collision whose installation position is limited.

### BRIEF DESCRIPTION OF THE DRAWINGS

Fig.1 is an axial cross section of an inflator of the present invention.
Fig.2 is an axial cross section of an inflator of the present invention.
Fig.3 is an axial cross section of an inflator of the present invention.
Fig.4 is an axial cross section showing another embodiment of the inflator in Fig. 3.
Fig.5 is an axial cross section of an inflator of the present invention.

### Description of Reference Numerals

10, 100, 200, 300 inflator
20 inflator housing
24 transfer tube
30 ignition means chamber
34 first gas discharge port
36 igniter
38 first rupturable plate
40 diffuser portion
46 second gas discharge port
48 second rupturable plate

### Most Preferred Embodiments of the Invention

### (1)First embodiment

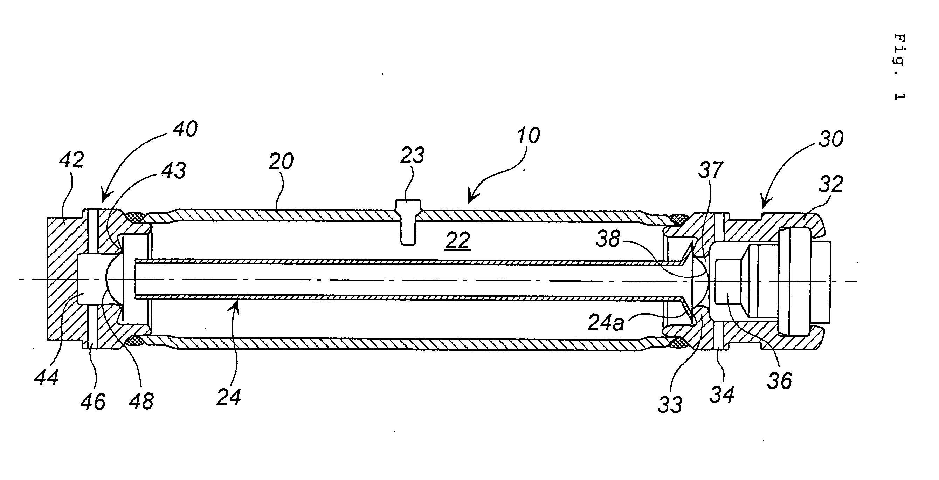

The first embodiment will be explained according to Fig.1. Fig.1 is an axial cross section of an inflator.

An inflator 10 comprises a tubular inflator housing 20 made of highly pressure resistant metal such as steel, an ignition means chamber 30 connected to one end, and a diffuser portion 40 connected to the other end. The ignition means chamber 30 and the diffuser portion 40 may be made of stainless, aluminum and so on.

In Fig. 1, the inflator housing 20, the ignition means chamber 30, and the diffuser portion 40 are separate members, but the entirety of three members can be formed of a single member (for example, the inflator housing forms the whole outer shell) and each portion can be separated by a partition wall and a rupturable plate.

The inner space 22 of the inflator housing 20 is kept airtight state, and argon, helium, nitrogen etc. is charged therein under high pressure.

An existing gas cylinder can be utilized as the inflator housing 20, which can be manufactured by swaging the pipe. In the inflator 10 of Fig. 1, the ignition means chamber 30 is connected to one end of the inflator housing 20, the diffuser portion 40 is connected to the other end, rupturable plates are arranged to be able to keep airtight state, and then, a pressurized gas is charged through a gap at a seal pin 23 inserted in a thin hole, and thereafter, the inflator housing 20 is welded at the seal pin 23.

As to the ignition means chamber 30, an outer shell is formed by the ignition means chamber housing 32. In the ignition means chamber housing 32, a plurality of first gas discharge ports 34 for ejecting the pressurized gas outside are arranged, and an igniter 36 comprising a priming is accommodated. The igniter 36 is connected to a power source (a battery of an automobile) via a connector and a lead wire.

In the first passage 37 between the inflator housing 20 (inner space 22) and the ignition means chamber 30, the first rupturable plate 38 made of stainless is arranged. The inside of the ignition means chamber 30 is under a normal pressure since the first passage 37 is closed with the first rupturable plate 38. A circumferential edge portion of the first rupturable plate 38 is fixed by welding to a first circular portion 33 obtained by radially protruding an inner surface of the ignition means chamber housing 32.

As to the diffuser portion 40, an outer shell is formed by a diffuser housing 42 and a second passage 44 is arranged inside. In the diffuser housing 42, a plurality of second gas discharge ports 46 for ejecting a pressurized gas outside are arranged.

Between the inflator housing 20 (inner space 22) and the second passage 44, the second rupturable plate 48 made of stainless is arranged. The inside of the diffuser portion 40 is under an ambient pressure since the second passage 44 is closed with the second rupturable plate 48. A circumferential edge portion of the second rupturable plate 48 is fixed by welding to a second circular portion 43 obtained by axially protruding an inner surface of the diffuser housing 42.

The inflator housing 20 and the ignition means chamber 30, and the inflator housing 20 and the diffuser 40 are connected by welding as shown in Fig. 1.

In the inflator housing 20, a transfer tube 24 is arranged as a leading means of breaking energy for breaking the second rupturable plate 48 in a space from the first rupturable plate 38 to the second rupturable plate 48. In one end opening portion of the transfer tube 24, the flange portion 24a is fixed by welding at the first circular portion 33 together with the first rupturable plate 38, but the other end is not fixed and not joining with the second rupturable plate 48. Thereby, since the pressurized gas also exists inside the transfer tube 24, a pressure in the transfer tube 24 is the same as that in the inner space 22.

The first gas discharge ports 34 arranged in the ignition means chamber 30 and the second gas discharge ports 46 arranged in the diffuser portion 40 can be the same or different in a total opening area in accordance with a kind of an applied inflator for an air bag and so on.

For example, when development of an air bag to one direction side is mainly demanded, a developing direction of an air bag can be controlled by increasing the total opening area of the first gas discharge ports 34 and increasing an ejection amount. In this case, by adjusting directions of the first gas discharge port 34 and the second gas discharge ports 46, a developing direction of an air bag can be controlled more easily.

Additionally, in case of using two air bags, if one air bag is connected to the first gas discharge port 34, the other air bag is connected to the second gas discharge port 46, and an opening area of the air bag which is to be inflated and developed primarily (for example, the air bag connected to the second gas discharge port 46) is made bigger, the air bag connected to the second gas discharge port 46 can be inflated and developed prior to the other air bag.

Next, operation of the inflator 10 shown in Fig.1 will be explained. When the first rupturable plate 38 is broken by activation of the igniter 36, breaking energy (mainly, a pressure produced by combustion of a priming) moves inside the transfer tube 24 instantly and collides with the second rupturable plate 48 to break the same.

Then, pressurized gas charged under a high pressure in the inner space 22 flows into the ignition means chamber 30 through the transfer tube 24 to be ejected from the first gas discharge port 34, and also, it flows into the second passage 44 to be ejected from the second gas discharge port 46. In this case, by arranging a flange portion 24a at one end of the transfer tube 24 to fall off from the first circular portion 33 (but not to hinder movement of the breaking energy inside the transfer tube 24), the pressurized gas directly flows into the ignition means chamber 30 to be ejected from the first gas discharge port 34.

In such an inflator 10, since the first gas discharge port 34 and the second gas discharge port 46 are disposed separately at both end portions, as compared to a case that gas discharge ports are arranged only at one end portion, in inflation and development of an air bag, development in the vertical and/or horizontal direction and a developing speed can be controlled more easily. Also, it is possible to introduce gas into different air bags to inflate them simultaneously, or to introduce gas into one air bag through two different portions to inflate the air bag uniformly in the vertical and/or horizontal direction.

Further, in the inflator 10, since the igniter 36 is installed only at one end portion and a lead wire connecting to a power source (a battery) is drawn from only one portion, as compared to a case of providing two igniters, wiring work can be performed easily and only a small space for wiring is needed.

### (2)Second embodiment

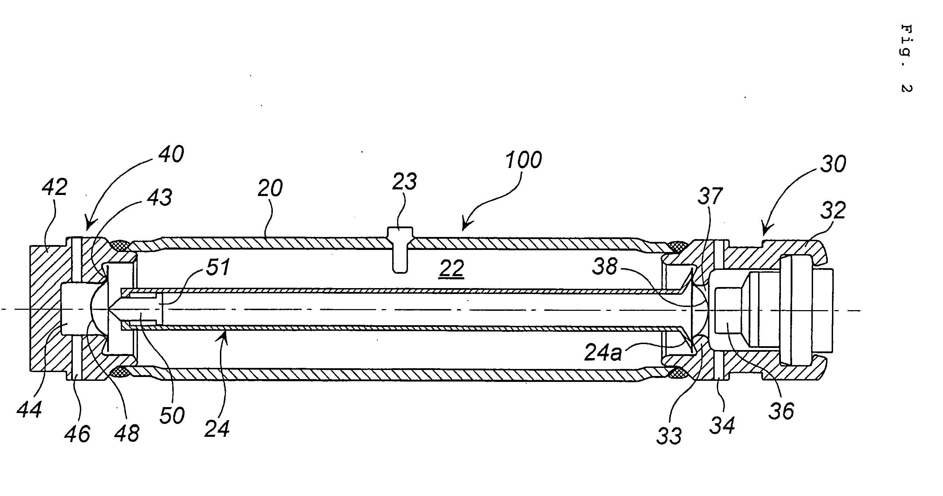

The second embodiment will be explained according to Fig.2. Fig.2 is an axial cross section of an inflator. Since the inflator 100 shown in Fig.2 and the inflator 10 shown in Fig. 1 have almost the same structure, the same parts are applied to the same numerals as in Fig. 1, so that explanation thereof is omitted. Mainly, different parts will be explained.

In the inflator housing 20, a transfer tube 24 is arranged as a leading means of breaking energy for breaking the second rupturable plate 48 in a space from the first rupturable plate 38 to the second rupturable plate 48.

In the transfer tube 24, a movable body (a check valve pin) 50 is inserted such that it can move axially freely. The movable body 50 is made of stainless, which is similar to the rupturable plate, and formed into an arrowhead shape with a sharp top.

By the way, even when the second rupturable plate 48 can be broken, in case of the whole movable body 50 flying out of the transfer tube 24, it may be possible that the movable body 50 moves, accompanying outflow of the pressurized gas, to close the opening area of the broken second rupturable plate 48

Accordingly, it is preferable that a base portion 51 (a portion opposite to the top) is provided to catch in an interior circumferential surface of the transfer tube 24, so that the base portion 51 can stay in the transfer tube 24 when the top of the movable body 50 collides with the second rupturable plate 48. Here, the transfer tube 24 and the movable body 50 (base portion 51) are arranged such that, prior to activation of the inflator 100, the pressurized gas flows into the transfer tube 24, and also, after activation of the inflator 100, the pressurized gas passes the transfer tube 24 to be discharged from the first gas discharge port 34.

Next, operation of the inflator 100 shown in Fig.2 will be explained. When the first rupturable plate 38 is broken by activation of the igniter 36, breaking energy (mainly, a pressure produced by combustion of a priming) moves inside the transfer tube 24 instantly. And, the movable body 50 flies out on receiving the breaking energy moving in the transfer tube 24 to collide with the second rupturable plate 48 and break the same. The same operation as that of the inflator 10 in Fig. 1 follows afterwards.

### (3)Third embodiment

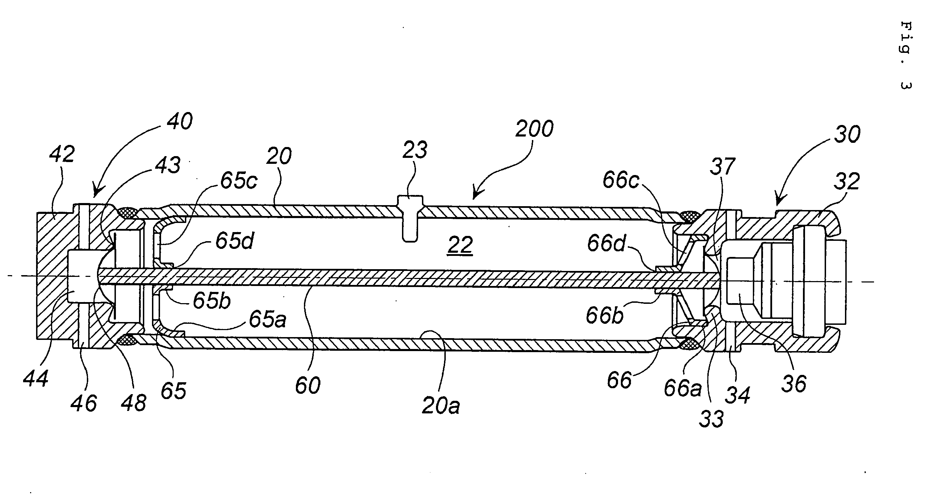

The third embodiment will be explained according to Fig.3. Fig.3 is an axial cross section of an inflator. Since the inflator 200 shown in Fig.3 and the inflator 10 shown in Fig. 1 have almost the same structure, the same parts are applied to the same numerals as in Fig. 1, so that explanation thereof is omitted. Mainly, different parts will be explained.

In the inflator housing 20, a detonating cord 60 is arranged as a leading means of breaking energy for breaking the second rupturable plate 48 in a space from the first rupturable plate 38 to the second rupturable plate 48.

The detonating cord 60 comprises a stainless thin tube charged with explosives, and is supported and fixed by retainers 65 and 66 disposed in the vicinity of the both end portions of the inflator housing 20 as shown in the drawing.

The retainer 65 presses an interior circumferential surface 22a of the inflator housing at a circular exterior circumference wall 65a and presses the detonating cord 60 at an circular interior circumference wall 65b, while the retainer 66 presses an interior circumferential surface 22a of the inflator housing at a circular exterior circumference wall 66a, and the detonating cord 60 at an circular interior circumference wall 66b, thereby supporting and fixing the detonating cord 60.

In the retainers 65 and 66, vents 65c and 66c are provided respectively to make the pressurized gas flow smoothly, and further, supporting ports 65d and 66d (the ports surrounded by the respective circular interior circumference walls 65b and 66b) are provided in the center portion to make the detonating cord 60 penetrate and support the same.

By press-fitting such retainers 65 and 66 through both end opening portions of the inflator housing 20 prior to installing the ignition means chamber 30 and the diffuser portion 40, the detonating cord 60 is disposed such that its one end side faces (not contacts with) or contacts with the first rupturable plate 38, and the other end side faces (not contacts with) or contacts with the second rupturable plate 48. In this case, shapes and structures of the retainers 65 and 66 can be appropriately changed as long as they can support and fix the detonating cord 60.

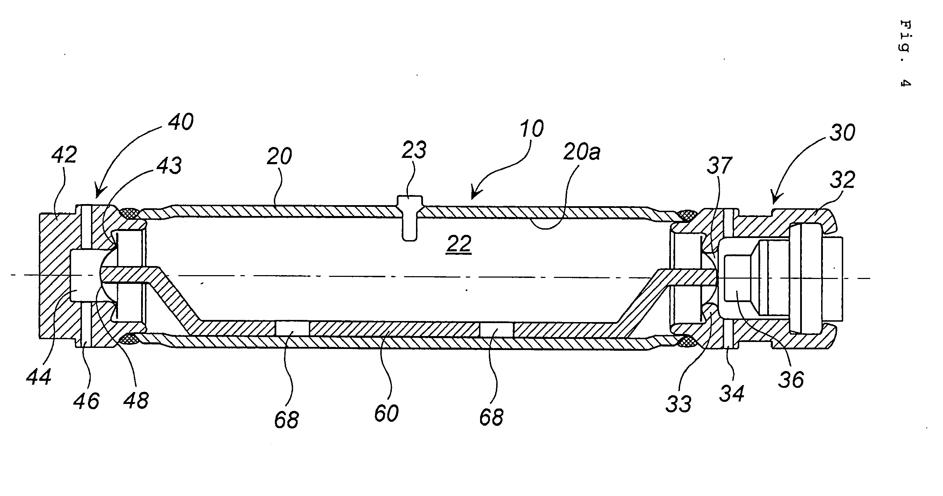

Also, as a fixing method of the detonating cord 60, it can be disposed such that its one end side faces (not contacts with) or contacts with the first rupturable plate 38 and the other end side faces (not contacts with) or contacts with the second rupturable plate 48, by providing the detonating cord 60 along the interior circumferential surface 20a of the inflator housing and fixing desired portions thereof with an adhesive or an adhesive tape 68 made of aluminum or stainless as shown in Fig.4.

Next, operation of the inflators 200 shown in Fig.3 and 4 will be explained. When the first rupturable plate 38 is broken by activation of the igniter 36, explosives in the detonating cord 60 are ignited and the second rupturable plate 48 is broken by explosive power of this gunpowder. The same operation as that of the inflator 10 in Fig. 1 follows afterwards.

### (4) Fourth embodiment

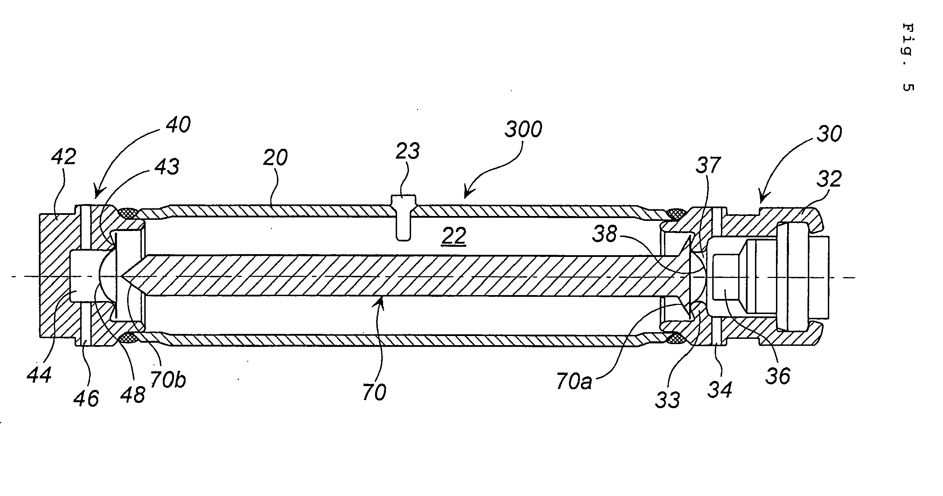

The fourth embodiment will be explained according to Fig. 5. Fig. 5 is an axial cross section of an inflator. Since the inflator 300 shown in Fig. 5 and the inflator 10 shown in Fig. 1 have almost the same structure, the same parts are applied to the same numerals as in Fig. 1, so that explanation thereof is omitted. Mainly, different parts will be explained.

In the present embodiment, the combination of the transfer tube 24 and the movable body (check valve pin) 50 in Fig.2 is replaced with a rod-shaped body.

In the inflator housing 20, a rod-shaped body 70 is disposed as a leading means of breaking energy for breaking the second rupturable plate 48 in a space from the first rupturable plate 38 to the second rupturable plate 48.

One end portion 70a of the rod-shaped body 70 is welded and fixed together with the first rupturable plate 38 at the first circular portion 33, but when the first rupturable plate 38 is broken by activation of the igniter 36, the welded and fixed portion is to fall off easily. The other end portion 70b of the rod-shaped body 70 is sharp arrowhead shape because it is to break the second rupturable plate 48.

Next, operation of the inflator 300 shown in Fig.5 will be explained. When the first rupturable plate 38 is broken by activation of the igniter 36, the rod-shaped body 70 receives breaking energy (mainly, a pressure produced by combustion of a priming), moves axially, and collides with the second rupturable plate 48 to break the same. The same operation as that of the inflator 10 in Fig. 1 follows afterwards.

## Claims

1. An inflator comprising a tubular inflator housing, an ignition means chamber connected to one end of the tubular inflator housing and a diffuser portion connected to the other end of the tubular inflator housing,
wherein the ignition means chamber includes an igniter and a gas discharge port, and by a first rupturable plate closes between the inside of the inflator housing and the ignition means chamber,
the diffuser portion has a gas discharge port, and a second rupturable plate closes between the inside of the inflator housing and the diffuser portion, and
a pressurized gas is charged under a high pressure inside the tubular inflator housing.

2. The inflator as claimed in claim 1, in which a leading means of breaking energy for breaking the second rupturable plate is arranged in a space from the first rupturable plate to the second rupturable plate in the tubular inflator housing, and by activation of the igniter accommodated in the ignition means chamber, the first rupturable plate is broken first and then, the second rupture is broken later.

3. The inflator as claimed in claim 2, in which the leading means of breaking energy for breaking the second rupturable plate is a tube disposed in a space from the first rupturable plate to the second rupturable plate, and the breaking energy is transferred through the tube.

4. The inflator as claimed in claim 1, in which a leading means of breaking energy for breaking the second rupturable plate is arranged in a space from the first rupturable plate to the second rupturable plate in the tubular inflator housing, and a movable body moving on receiving the breaking energy and colliding with the second rupturable plate is also provided, and, by activation of the igniter accommodated in the ignition means chamber, the first rupturable plate is broken first and the second rupturable plate is broken later.

5. The inflator as claimed in claim 4, in which the leading means of breaking energy for breaking the second rupturable plate is a tube disposed in a space from the first rupturable plate to the second rupturable plate, and the movable body is disposed in the tube and moves in the tube on receiving the breaking energy to collide with the second rupturable plate.

6. The inflator as claimed in claim 1, in which the leading means of breaking energy for breaking the second rupturable plate is arranged in a space from the first rupturable plate to the second rupturable plate in the tubular inflator housing, the leading means of breaking energy is a detonating cord, and the first rupturable plate is broken first and the second rupturable plate is broken later.

7. The inflator as claimed in claim 1, in which a leading means of breaking energy for breaking the second rupturable plate is arranged in a space from the first rupturable plate to the second rupturable plate in the tubular inflator housing, the leading means of breaking energy is a rod-shaped body disposed in a space from the first rupturable plate to the second rupturable plate, the rod-shaped body moves on receiving breaking energy to collide with the second rupturable plate, and the first rupturable plate is broken first and the second rupturable plate is broken later.

8. The inflator as claimed in any one of claims 1 to 8, in which the total opening areas of gas discharge ports on both sides are different.
